# FASCICULE DE BREVET EUROPEEN

(11) **EP 1 776 549 B1**
(45) Date de publication et mention de la délivrance du brevet: **12.06.2013**
(21) Numéro de dépôt: 05768698.2
(22) Date de dépôt: 04.07.2005
(51) Int. Cl.: F24H 9/18, B23K 26/28, B23K 26/10

(54) **PROCEDE DE SOUDAGE LASER D'UN CHAUFFE-EAU**
VERFAHREN ZUM LASERSCHWEISSEN EINES KESSELS
METHOD FOR LASER WELDING OF A BOILER

(30) Priorité: 05.07.2004 EP 04015748
(43) Date de publication de la demande: 25.04.2007
(73) Titulaire: LASAG AG, 3602 Thun (CH)
(72) Inventeur: MONTANARO, Mario, CH-3604 Thun (CH); NAMAN, David, CH-3600 Thun (CH); BELTRAMI, Gustavo, I-28805 Vogogna (IT)
(74) Mandataire: Meissner, Bolte & Partner
(86) Numéro de dépôt international: PCT/EP2005/007189
(87) Numéro de publication internationale: WO 2006/002965

(56) Documents cités:
- EP-A- 0 622 150
- DE-A- 19 741 093
- DE-U1- 9 319 046

## Description

L'invention concerne un procédé de soudage d'un chauffe-eau ou générateur de vapeur comportant une enceinte pour recevoir un liquide à chauffer oulet à évaporer et un corps de chauffe. Plus particulièrement, l'invention concerne de tels dispositifs où le corps de chauffe pénètre à l'intérieur de l'enceinte pour chauffer directement le liquide qu'elle contient. L'invention concerne aussi un chauffe-eau ou un générateur de vapeur produit avec ce procédé.

En particulier, la présente invention concerne un chauffe-eau ou un générateur de vapeur équipant une machine à café. Bien entendu, l'invention s'applique à tous dispositifs similaires, pour la production d'eau chaude ou la génération de vapeur notamment pour chauffer rapidement du lait.

La présente invention est susceptible d'application pour des chauffe-eau agencés dans des dispositifs de plus grand volume, notamment des lave-linges ou lave-vaisselles.

On notera ici que par chauffe-eau, il faut comprendre un dispositif agencé pour chauffer un liquide, en particulier de l'eau mais également d'autres liquides.

### ART ANTERIEUR

On connaît des chauffe-eau et des générateurs de vapeur équipant des machines à café qui sont formés par une enceinte massive obtenue par coulage d'un métal, notamment d'aluminium. L'enceinte présente à l'extérieur des gorges pour le passage d'un corps de chauffe agencé hors de l'enceinte dans laquelle est introduit la liquide à chauffer. Les deux parties principales formant l'enceinte sont fixées l'une à l'autre par plusieurs vis et les éléments d'introduction et/ou de sortie du liquide sont vissés de manière étanche au boîtier massif, lequel présente au moins à ces endroits une paroi relativement épaisse pour permettre l'usinage d'un filetage suffisamment profond au maintien de ces éléments. De tels chauffe-eau ou générateurs de vapeur sont particulièrement onéreux à fabriquer. L'apport de chaleur au liquide est effectué à travers la paroi massive de l'enceinte, ce qui engendre une certaine inertie dans la transmission de la chaleur du corps de chauffe au liquide à chauffer ou à évaporer et aussi des pertes de chaleur relativement importantes.

Il est aussi connu des chauffe-eau avec un corps de chauffe introduit dans l'enceinte contenant le liquide à chauffer, notamment du document GB 2 290 601. Ce dernier document enseigne une introduction du corps de chauffe dans l'enceinte par une ouverture dans une paroi supérieure plane de l'enceinte. La fixation du corps de chauffe à cette paroi supérieure peut être obtenue par soudage ou brasage. Le document DE-A-197 41 093 propose une plaque de fermeture d'un chauffe-eau traversé également par le corps de chauffe qui est soudé à cette plaque. L'ouverture dans la plaque pour le passage du corps de chauffe consiste en un simple percement de la plaque plane. Ce dernier document mentionne qu'un soudage étanche peut être obtenu notamment par un soudage au laser.

La présente invention a pour but de proposer un chauffe-eau ou générateur de vapeur dont le coût de fabrication soit peu onéreux tout en étant fiable, notamment en ce qui concerne l'étanchéité de l'enceinte de chauffage du liquide.

Pour diminuer le coût de fabrication, il est prévu par exemple de former l'enceinte par emboutissage de plaques métalliques minces. Or, en particulier avec un couvercle plat et mince comme divulgué dans les deux documents cités ci-avant, il est difficile d'assurer une fixation étanche du corps de chauffe à ce couvercle par un soudage au laser lorsque le passage prévu est un simple trou dans ce couvercle plat. En effet, les tolérances d'usinage peuvent engendrerune fente entre le corps de chauffe cylindrique et le trou circulaire prévu dans la paroi de l'enceinte de chauffage. Pour souder le corps de chauffe à l'aide d'un faisceau laser, on dispose alors de peu de matière à fondre pour combler rigidement la fente susmentionnée étant donné que la plaque a une faible épaisseur. On risque ainsi de fragiliser la zone de soudage et de ne pas garantir une bonne étanchéité dans cette zone, soit dès la fabrication du chauffe-eau ou générateur de vapeur, soit après une certaine période d'utilisation.

On remarquera que le corps de chauffe peut subir diverses contraintes mécaniques ou thermiques. Or, dans l'art antérieur susmentionné, le corps de chauffe est perpendiculaire au couvercle plat et donc tenu seulement sur une très faible distance correspondant environ à l'épaisseur du couvercle lorsque le soudage est effectué par un faisceau laser. On comprend donc que la fixation est relativement fragile dans un tel cas.

Le document DE-U-319046 montre un chauffe-eau avec une collerette prévue à la périphérie de chaque ouverture pour le passage du corps de chauffe. Un soudage est effectué au niveau de la collerette. Ce document ne donne aucune indication quant au procédé de soudage ou quant au type d'installation de soudage prévu. Les collerettes, représentées aux figures, ne sont nullement décrites de sorte que ce document est muet quant à une fonction éventuelle de telles collerettes.

L'invention a ainsi pour but de palier aux problèmes de l'art antérieur susmentionné et de fournir un procédé de soudage efficace d'un corps de chauffe à une enceinte d'un chauffe-eau ou d'un générateur de vapeur pour permettre une production de tels dispositifs avec un bon rendement industriel.

### RESUME DE L'INVENTION

L'invention concerne un procédé de soudage d'un chauffe-eau ou générateur de vapeur comportant une enceinte et un corps de chauffe avec une partie principale située à l'intérieur de l'enceinte et au moins une partie terminale sortant de cette enceinte, cette au moins une partie terminale traversant l'enceinte par au moins une ouverture correspondante prévue dans une paroi de cette enceinte, cette dernière comprenant une collerette agencée en périphérie de chaque ouverture correspondante et qui s'éleve hors de la surface générale de la paroi de l'enceinte selon la direction axiale (25) de la partie terminale au niveau de cette ouverture. Ce procédé de soudage est caractérisé en ce que le corps de chauffe est fixé de manière étanche à l'enceinte par un soudage laser effectué au moyen d'un faisceau laser dirigé sensiblement sur la surface annulaire supérieure de chaque collerette, ledit faisceau laser et ladite direction axiale définissant entre eux un angle d'incidence ayant une valeur située sensiblement entre 10 et 45 degrés, de manière que cette collerette fournisse un réservoir de matière pour former un cordon de soudure continu au niveau du haut de celle-ci.

On notera que le soudage effectué à l'aide d'un faisceau laser permet d'obtenir une soudure propre avec un apport de chaleur contrôlé de manière à ne pas endommager le corps de chauffe, en particulier d'éviter un court-circuit entre le tube externe et le conducteur électrique interne formant ce corps de chauffe.

Grâce aux caractéristiques de l'invention, la fixation du corps de chauffe à l'enceinte par un soudage au laser peut être effectuée de manière efficace et reproductible, en assurant une bonne étanchéité au niveau de la soudure et une fixation rigide. La collerette sert de guide pour la partie terminale du corps de chauffe; elle assure ainsi un maintien latéral correct et fournit la matière nécessaire à la formation d'un cordon de soudure continu, sans fragiliser ou amincir la paroi de l'enceinte pour combler une fente éventuelle entre ladite partie terminale et la collerette.

Ensuite, cette collerette peut être mince tout en garantissant la quantité de la soudure au laser. De plus, elle évite de déformer l'enceinte en périphérie de l'ouverture et limite les contraintes thermiques transmises à la zone périphérique de l'enceinte en diminuant la quantité d'énergie à fournir pour effectuer la soudure.

L'invention a également pour objet un procédé de soudage d'un chauffe-eau ou générateur de vapeur obtenu par le procédé de soudage selon l'invention décrit ci-avant et comportant une enceinte formée au moins de deux parties, caractérisé en ce que ces deux parties présentent chacune un bord saillant qui sort hors de la surface générale de ladite enceinte et qui est appliqué contre le bord saillant de l'autre partie, les deux bords saillants respectifs de ces deux parties étant soudés par un faisceau laser au niveau du sommet de ces deux bords saillants qui se rejoignent.

Certains avantages mentionnées en relation avec l'agencement d'une collerette définissant l'ouverture pour le passage d'une partie terminale d'un corps de chauffe et avec le procédé spécifique de ce corps de chauffe selon l'invention s'appliquent également au soudage de deux parties d'enceinte selon l'invention, en particulier concernant le réservoir de matière pour obtenir une soudure continue de bonne qualité assurant une bonne étanchéité de l'enceinte sans la fragiliser ou nécessiter d'augmenter son épaisseur dans la zone de la soudure.

### BREVE DESCRIPTION DES FIGURES

La présente invention sera décrite de manière plus détaillée à l'aide du dessin ci-joint, lequel est donné à titre d'exemple nullement imitatif, et dans lequel :
- la figure 1 représente une vue éclatée en perspective d'un chauffe-eau selon l'invention;
- la figure 2 est une vue en perspective du chauffe-eau de la figure 1 après fermeture de l'enceinte, dans laquelle une partie de cette enceinte est arrachée;
- la figure 3 est une coupe d'une extrémité d'un corps de chauffe soudé à l'enceinte du chauffe-eau de la figure 2;
- les figures 4A et 4B représentent chacune un profil de puissance des impulsions du faisceau laser utilisé pour effectuer la soudure de la figure 3;
- la figure 5 est une vue éclatée en perspective d'un générateur de vapeur selon l'invention;
- la figure 6 est une vue en perspective du générateur de vapeur de la figure 5 après fermeture de l'enceinte;
- la figure 7 est un agrandissement partiel de la figure 6 montrant l'agencement de l'enceinte au passage du corps de chauffe;
- les figures 8 et 9 montrent respectivement deux variantes de réalisation de la collerette entourant l'ouverture de passage du corps de chauffe;
- la figure 10 représente partiellement une Installation de soudage au laser pour effectuer les soudures selon la présente invention;
- la figure 11 montre une partie de l'installation de la figure 10 agencée pour l'apport d'un gaz de travail à la tête de soudage rotative;
- la figure 12 montre un deuxième mode de réalisation d'une installation laser de soudage selon invention,

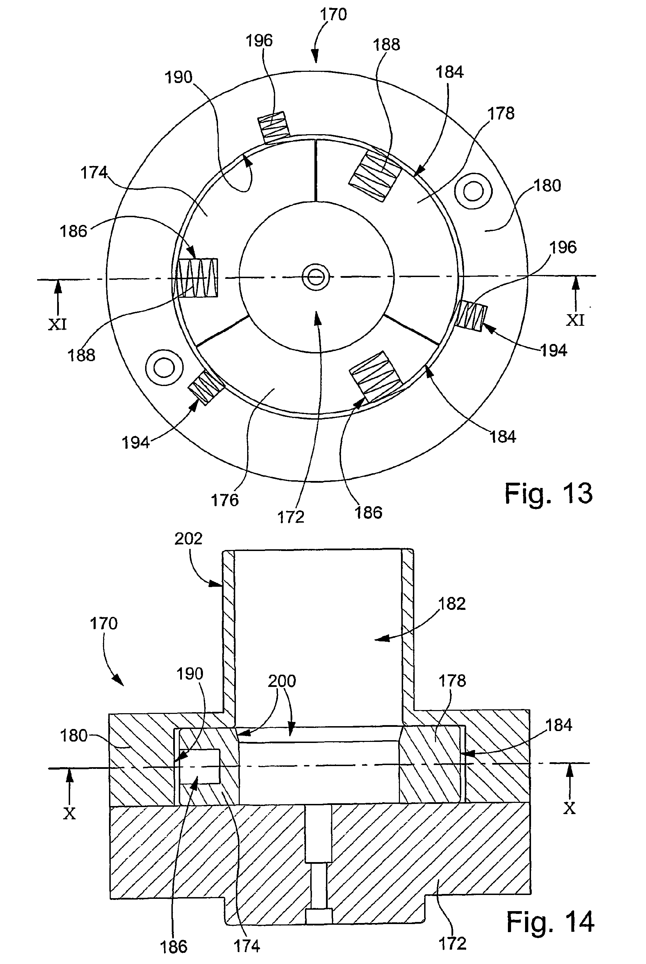

- la figure 13 représente en coupe horizontale un outil de positionnement du corps de chauffe du chauffe-eau de la figure 1 pour effectuer le soudage de ce corps de chauffe à l'enceinte du chauffe-eau; et
- la figure 14 est une coupe verticale de l'outil de la figure 10 selon le plan de coupe XI-XI.

### DESCRIPTION DETAILLEE

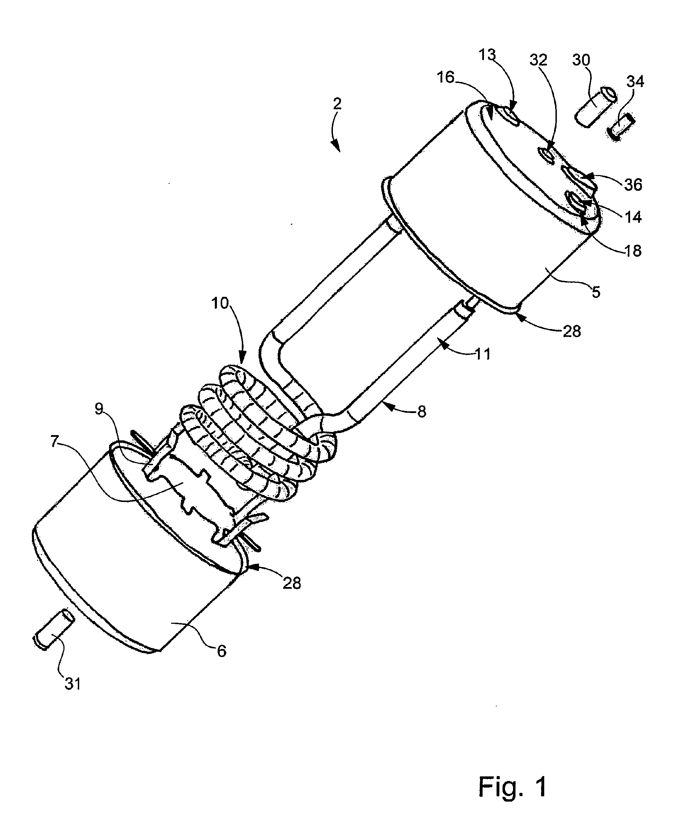

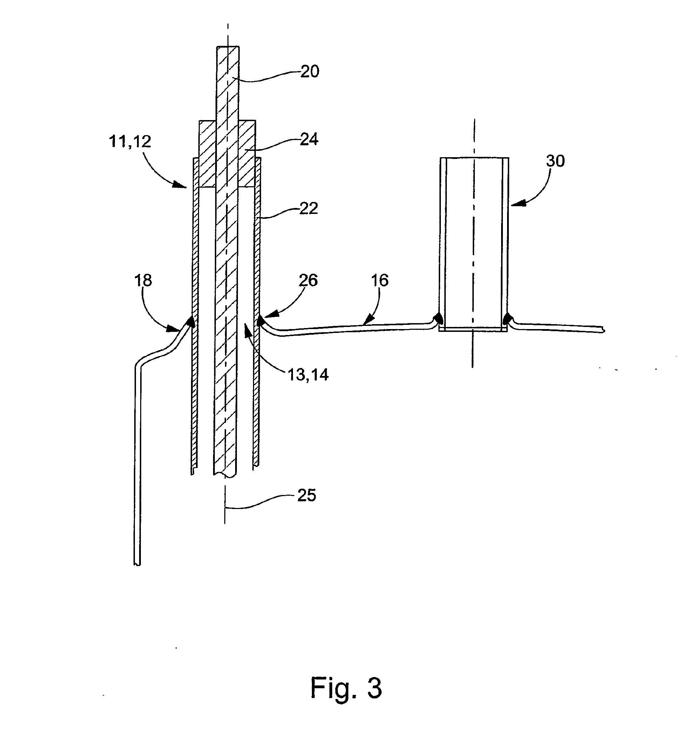

A l'aide des figures 1 à 3, on décrira ci-après un chauffe-eau selon la présente invention. Ce chauffe-eau 2 comprend une enceinte 4 formée de deux parties 5 et 6. Il comprend en outre un corps de chauffe 8 ayant une partie principale 10 en forme de spiral prévue à l'intérieur de l'enceinte 4 et deux parties terminales 11 et 12 qui sortent de l'enceinte. Les deux parties terminales 11 et 12 sont cylindriques et sensiblement rectilignes. La partie supérieure 5 de l'enceinte comprend sur sa face d'extrémité 16 deux ouvertures circulaires 13 et 14. Le diamètre de ces ouvertures correspond sensiblement au diamètre des parties terminales 11 et 12 du corps de chauffe. Ces parties terminales 11 et 12 sont introduites depuis l'intérieur de la partie 5 dans les ouvertures correspondantes 13 et 14. Ainsi, ces parties terminales traversent la paroi de l'enceinte 4. La paroi d'extrémité 16 est légèrement bombée et deux collerettes 18 définissent respectivement les ouvertures 13 et 14. Selon l'invention chaque collerette s'élève hors de la surface générale de cette paroi d'extrémité selon la direction axiale de la partie terminale correspondante dans l'ouverture de cette collerette. Les collerettes 18 sont formées de manière à ce que le bord de chaque ouverture soit situé sensiblement dans un plan géométrique perpendiculaire à l'axe longitudinal 19 du chauffe-eau 2. Le bord de chaque collerette 18 définit ainsi un cercle.

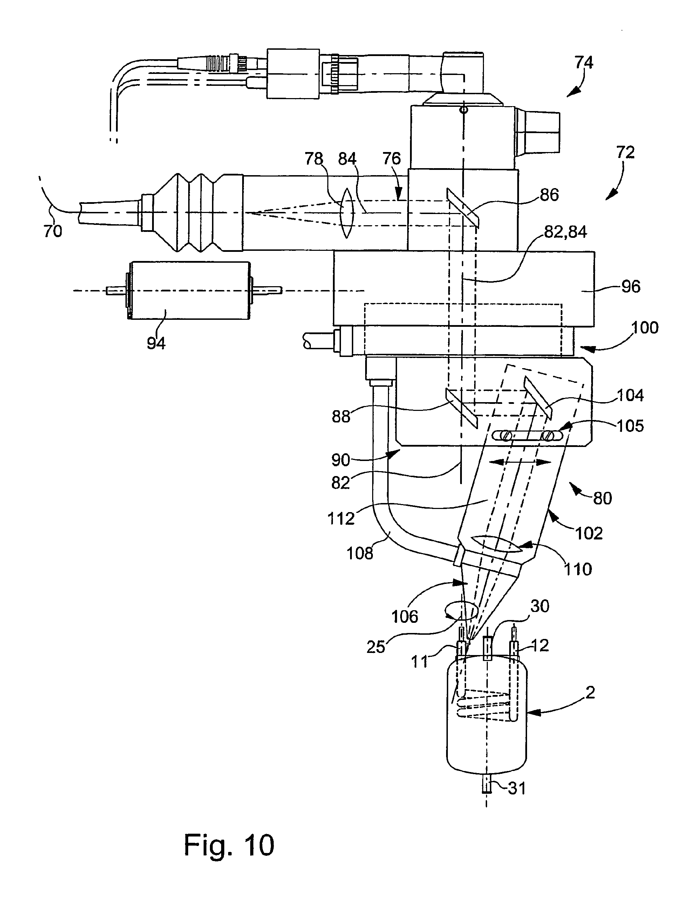

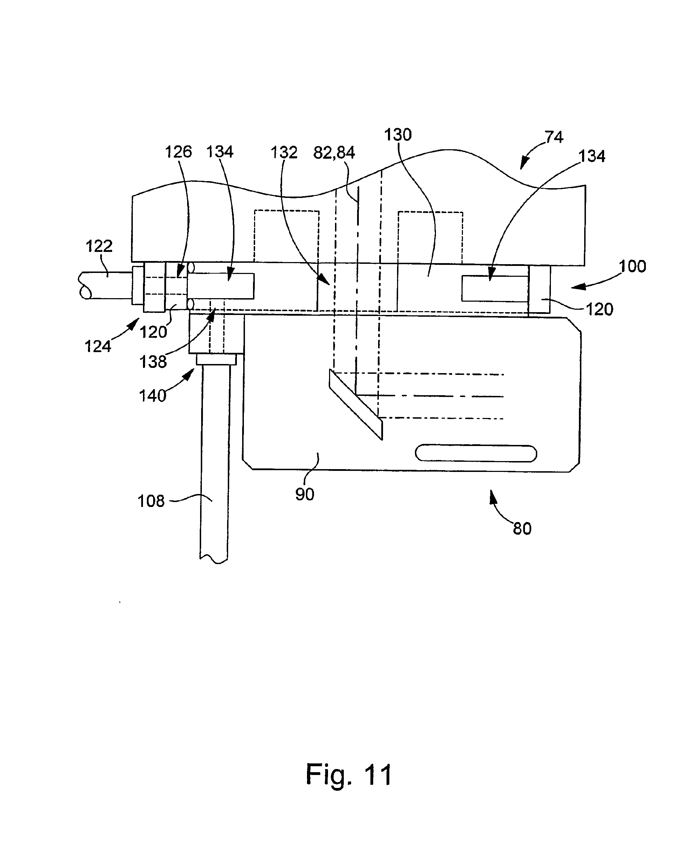

Lors de la fabrication du chauffe-eau, il est prévu d'introduire les deux parties terminales 11 et 12 dans les deux ouvertures respectives 13 et 14 de manière que la partie principale 10 soit située à l'intérieur de l'enceinte 4 après sa fermeture. La fixation du corps de chauffe 8 à la partie 5 de l'enceinte 4 est effectuée au moyen d'un soudage par un faisceau laser des deux parties terminales 11 et 12 à l'enceinte 4 au niveau des deux ouvertures 13 et 14. Ce soudage laser est effectué de manière à assurer l'étanchéité au niveau des ouvertures 13 et 14. Le corps de chauffe 8 est positionné relativement à la partie 5 par des moyens de positionnement qui assurent un centrage du corps de chauffe dans l'enceinte. Un outil de positionnement prévu à cet effet est représenté aux figures 10 et 11.

Il est en effet important lors du soudage du corps de chauffe à l'enceinte que celui-ci soit centré relativement à cette enceinte pour éviter qu'il soit trop proche de la paroi de celle-ci. Dans un mode de fabrication préféré, il est prévu de souder le corps de chauffe à la partie supérieure 5 de l'enceinte avant d'apporter la partie inférieure 6 et de fermer l'enceinte par assemblage de ces deux parties. Pour effectuer le soudage du corps de chauffe, il est prévu d'utiliser l'outil 170 représenté aux figures 10 et 11. On notera ici qu'un problème de positionnement correct et stable du corps de chauffe relativement à la partie supérieure 5, pour effectuer un soudage précis, provient de la forme en spirale du corps de chauffe et du fait que son diamètre varie d'une pièce à l'autre. La tolérance de fabrication pour de telles pièces est généralement supérieure à ± 1 mm, notamment ± 1.5mm.

L'outil 170 développé dans le cadre de l'invention est formé d'une base 172 agencée pour être fixée à l'installation de soudage au laser. Sur cette base, des mors de serrage 174, 176 et 178 sont agencés de manière sensiblement concentrique et mobile radialement. Sur la base est également montée un partie supérieure 180 définissant un logement pour les mors de serrage et un canal 182 au-dessus de ceux-ci pour l'introduction du corps de chauffe. Dans la paroi latérale externe 184 de chaque mors est prévu un évidement 186 pour un ressort 188 qui est en butée contre la paroi interne 190 de la partie 180. On notera que les évidements 186 sont décentrés relativement aux mors. De même, il est également prévu des évidements 194 dans la paroi interne 190 pour des ressorts 196 venant en butée contre les parois latérales 184. Il est prévu dans une variante avantageuse que la force exercée par chaque ressort 196 est inférieure à celle exercée par chaque ressort 188, ou inversement.

Les mors présentent dans leur partie supérieure une surface inclinée 200 pour guider la spirale du corps de chauffe lors de son introduction entre les mors. Le diamètre entre les mors est prévu initialement légèrement inférieur au diamètre minimum de ladite spirale. Ainsi, lors de l'introduction du corps de chauffe, celui-ci écarte les mors qui alors le serrent tout en assurant un bon centrage. La partie supérieure 5 de l'enceinte 4 est placée sur la partie 180 avec la paroi 202 du canal 182 formant un guide pour que les parties terminales 11 et 12 du corps de chauffe soient positionnées correctement relativement aux ouvertures 13 et 14 de l'enceinte. La paroi 202 positionne la partie 5 de l'enceinte lors du soudage laser.

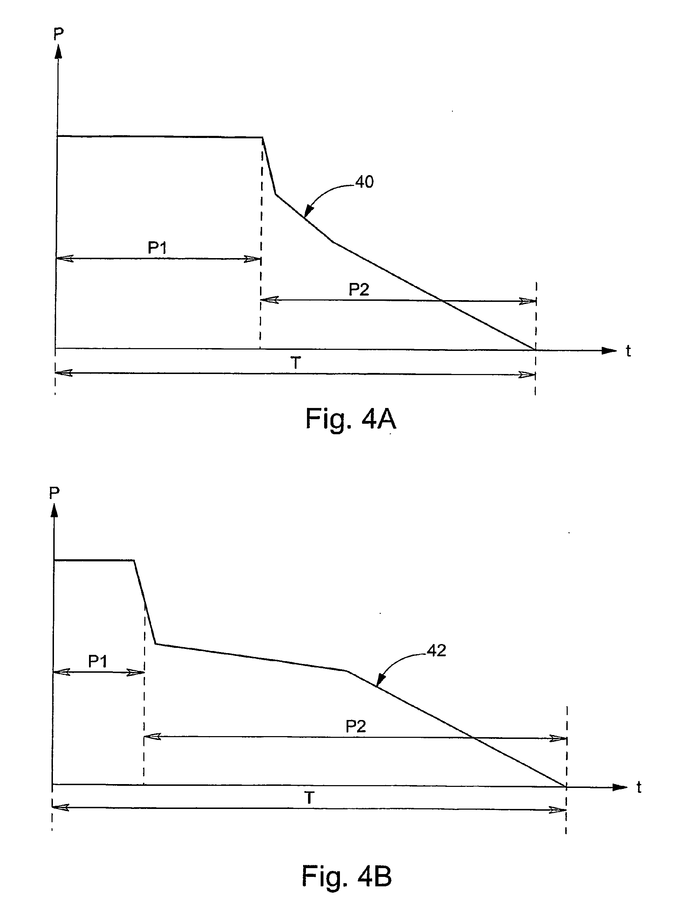

Les parties terminales 11 et 12 sont formées par un conducteur central 20 entouré d'une paroi externe métallique 22, cette dernière étant agencée à une certaine distance du conducteur 20. A l'extrémité du tube 22 est agencée une partie isolante en céramique 24. Cette partie isolante 24 peut être plus ou moins longue et s'étendre notamment jusqu'au niveau de l'ouverture 13, 14. Le bord de la collerette 18 est donc soudé par un faisceau laser à la paroi externe 22. Le cordon de soudure définit ainsi un cercle centré sur l'axe géométrique 25 du tube cylindrique 22. La soudure est effectuée de préférence à l'aide d'un faisceau laser pulsé qui engendre une succession de points de soudure se superposant partiellement l'un à l'autre. On effectue ainsi une soudure continue et étanche tout au long du cercle défini par le bord de la collerette 18. Comme cela sera décrit par la suite, le faisceau laser effectue une rotation autour de l'axe 25 pour effectuer la soudure circulaire 26. Une forme préférentielle des impulsions laser utilisée pour le soudage décrit ici est représentée aux figures 4A et 4B. Ces figures 4A et 4B représentent schématiquement deux courbes de puissance 40 et 42 formant chacune des impulsions fournies par l'installation laser. Le profil de ces impulsions laser se caractérise par une première période P1 dans laquelle la puissance instantanée est essentiellement supérieure à la puissance instantanée d'une deuxième période P2 suivant la première période P1. De plus, la puissance dans la seconde période P2 présente une courbe globalement décroissante.

A titre d'exemple, en particulier pour une enceinte et une paroi externe du chauffe-eau en inox, la fréquence des impulsions laser est prévue entre 30 et 100 Hz, la puissance dans la première période P1 étant située entre 1 et 2 kW. La durée des impulsions T se situe environ entre 4 et 10 millisecondes. De manière avantageuse, l'énergie de chaque impulsion a une valeur d'environ 3 à 8 Joules alors que la puissance moyenne se situe entre 150 et 500 W. Des essais concluant ont été effectués sous ces conditions avec une vitesse de déplacement du faisceau laser entre 400 et 1000 mm par minute.

Le profil de puissance des impulsions a été sélectionné de manière à diminuer l'énergie nécessaire au soudage tout en assurant une très bonne fixation mécanique et l'étanchéité requise à un chauffe-eau ou générateur de vapeur. Ensuite, la forme des impulsions permet d'améliorer la qualité optique du cordon de soudure 26 et de diminuer les contraintes thermique par un refroidissement plus long résultant du profil de puissance de la deuxième période P2 de l'impulsion.

Les parties 5 et 6 de l'enceinte 4 sont formées par emboutissage et présentent une paroi relativement mince. La soudure au laser ne nécessite pas de parois épaisses. L'enceinte 4 peut donc être fabriquée notamment par emboutissage à moindre coût. Pour positionner la spirale du corps de chauffe dans l'enceinte et la maintenir fixement dans sa position centrée, il est prévu dans le fond de la partie inférieure 6 de l'enceinte une structure 7 avec des pattes élastiques 9 contre lesquelles s'appuient la spirale 10 lorsque l'enceinte est fermée.

Le chauffe-eau 2 comprend encore des embouts ou éléments de raccord 30 et 31 associés au circuit de circulation du liquide à chauffer. Ces embouts 30 et 31 sont respectivement positionnés dans deux ouvertures 32 et soudés de manière étanche par un faisceau laser. Comme pour le soudage du corps de chauffe, le cordon de soudure est circulaire et continu. Le procédé de soudage de ces embouts est similaire à celui décrit ci-avant pour le soudage du corps de chauffe à l'enceinte. En outre, le chauffe-eau comprend une borne 34 de mise à la terre qui est également soudée par faisceau laser à une plage de contact 36 de l'enceinte. L'ensemble des éléments assemblés à l'enceinte 4 sont donc fixés de préférence par un soudage au laser. Ceci permet de rationaliser la fabrication des chauffe-eau, de diminuer le temps de production et le coût de tel chauffe-eau. On notera qu'une sonde de température peut également être fixée à l'enceinte 4 par un soudage au laser. Toutefois, d'autres moyens de fixation d'une telle sonde sont envisageables.

Finalement, après le soudage du corps de chauffe 8 à la partie métallique 5, les parties 5 et 6 sont assemblées également par un soudage au laser. Pour garantir un soudage robuste des parois minces de l'enceinte 4, les parties 5 et 6 présentent du côté de leurs extrémités ouvertes une partie terminale évasée 28, sortant de la surface cylindrique définie par la paroi latérale de la partie 5, respectivement 6 de l'enceinte 4.

Les parties évasées des deux parties 5 et 6 sont appliquées l'une contre l'autre en définissant une partie saillante de l'enceinte. Cette partie saillante définit un réservoir de matière pour effectuer un cordon de soudure épais et étanche malgré que la paroi de l'enceinte est mince. La soudure est avantageusement effectuée au sommet des deux parties évasées qui se rejoignent, mais peut aussi être effectuée entre les deux parties évasées par un soudage au travers d'une partie évasée, en particulier lorsque la partie évasée est au moins en partie être orientée perpendiculairement à la surface générale de l'enceinte.

On remarquera que le corps de chauffe peut présenter une seule partie terminale traversant la paroi de l'enceinte prévue pour le liquide à chauffer.

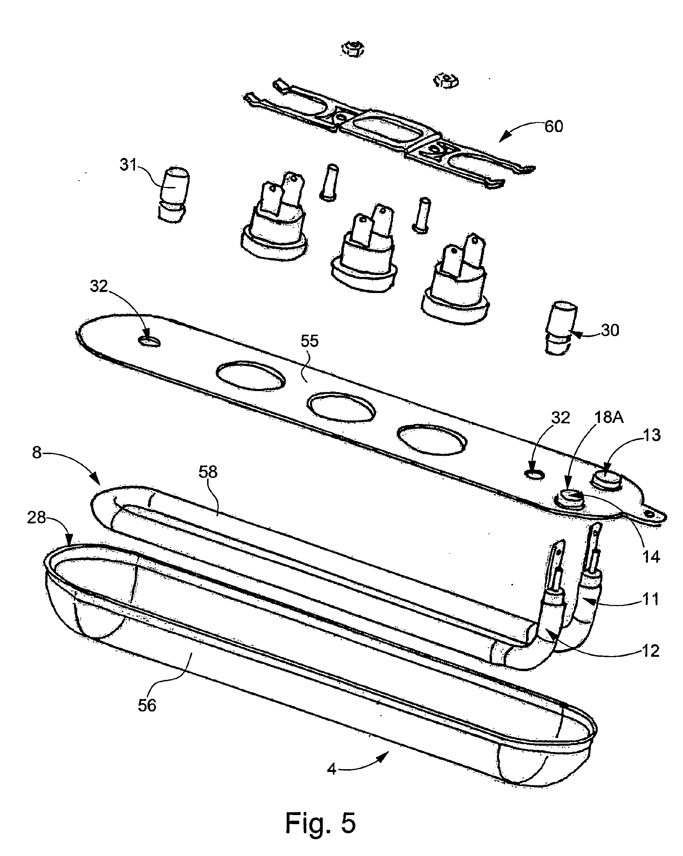

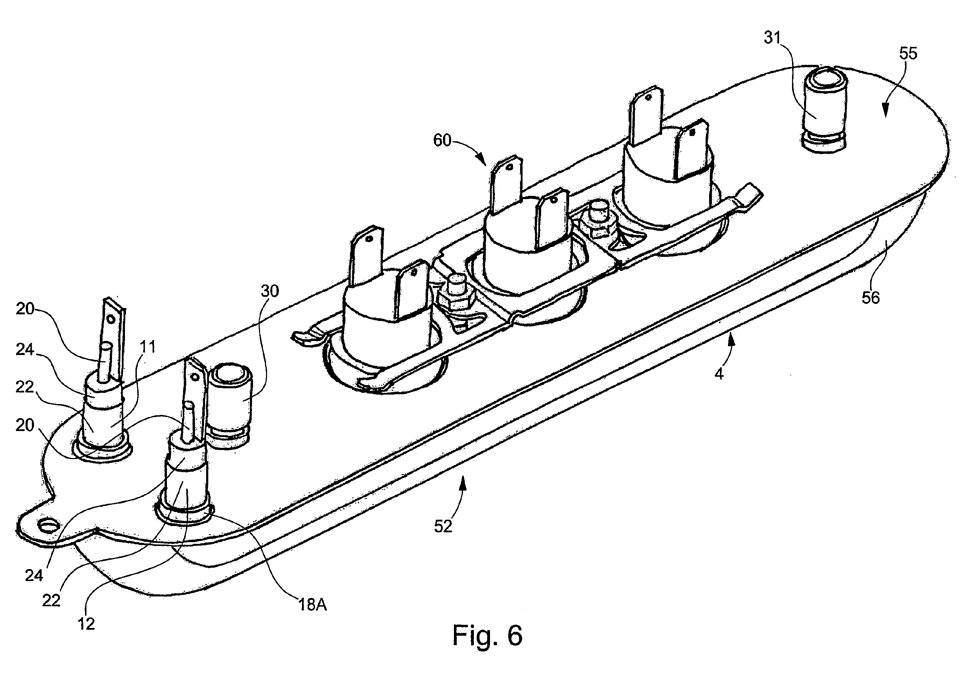

Les figures 5 et 6 montrent un générateur de vapeur selon la présente invention. Les références déjà décrites précédemment ne seront pas à nouveau décrites ici en détail.

Le générateur de vapeur 52 comporte une enceinte 4 formée d'une première partie supérieure 55 et d'une deuxième partie inférieure 56. Ces deux parties sont en métal embouti, notamment en inox. La partie 56 présente à son bord supérieur un léger évasement formant une saillie 28, de manière similaire à la partie 6 de l'enceinte du chauffe-eau de la figure 1. Le générateur de vapeur comporte également un corps de chauffe 8 formé d'une partie principale 58 et de deux parties terminales 11 et 12 qui définissent deux parties cylindriques traversant les ouvertures circulaires 13 et 14 prévues dans la partie supérieure 55. De manière similaire à ce qui a été décrit pour le chauffe-eau, les parties terminales 11 et 12 sont soudées à l'enceinte 4 au niveau des trous 13 et 14 définis par des collerettes cylindriques 18A. Ce soudage est effectué de manière étanche par un faisceau laser qui est orienté de manière à former un cordon de soudure à la jonction entre le bord du trou 13, respectivement 14 et la paroi métallique 22 de la partie terminale 11, respectivement 12. De préférence, le cordon de soudure est réalisé par une succession de points de soudure se superposant partiellement l'un au suivant. On obtient ainsi une soudure continue qui garantit une étanchéité également lorsque la pression augmente dans l'enceinte 4.

Un embout d'introduction d'eau 30 et un embout 31 de sortie de la vapeur produite sont également soudés à la partie supérieure 55 au niveau du bord des deux trous 32 respectifs. Finalement, un module de mesure de la température 60, comprenant trois capteurs de température, est assemblé à la partie supérieure 55.

L'enceinte 4 et le tube externe 22 formant le corps de chauffe 8 sont avantageusement réalisés en inox. Cependant, d'autres métaux peuvent être prévus par l'homme du métier. Avantageusement, les deux parties 55 et 56 de l'enceinte 4 sont fixées l'une à l'autre également par un soudage au laser. Bien que la paroi de l'enceinte 4 soit relativement mince, le soudage au laser permet un assemblage très solide des diverses parties grâce en particulier à la collerette 18A et à la partie évasée 28 formant le bord de la partie 56 de l'enceinte. De plus, le soudage au laser permet d'assurer une bonne étanchéité et une bonne résistance aux contraintes mécaniques, notamment à une élévation de la pression de l'enceinte. Le coût de matière pour réaliser une enceinte est réduit à un minimum et le coût global de fabrication du générateur de vapeur est relativement peu onéreux.

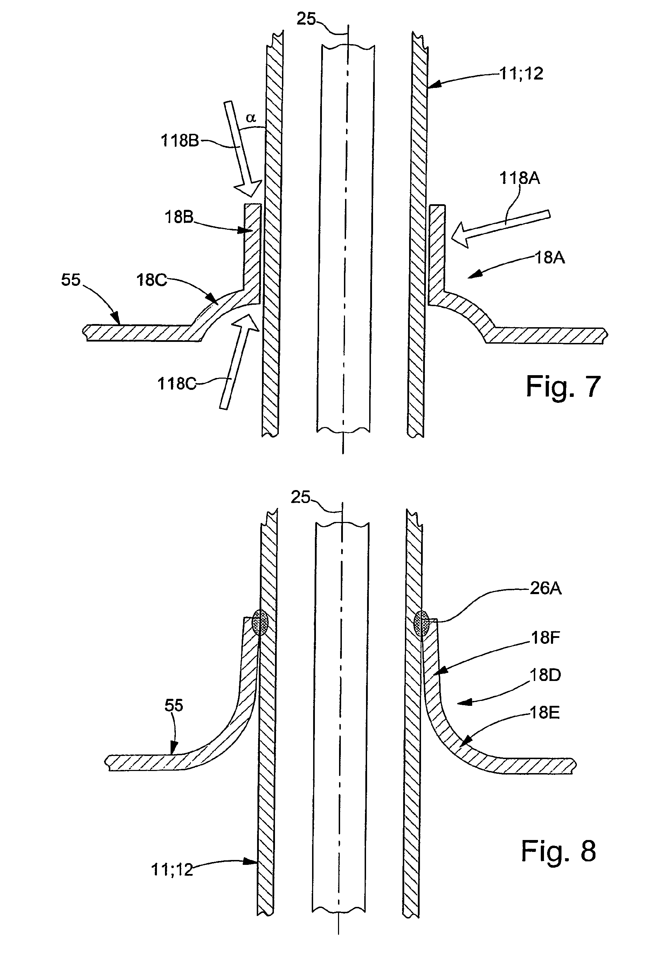

A la figure 7 est représenté schématiquement la région de la partie supérieure 55 du générateur de la figure 6 où est agencée une ouverture pour le passage du corps de chauffe. L'ouverture est définie par une collerette 18A qui s'élève hors de la surface générale plane de la partie supérieure 55. Dans cette variante, la collerette 18A présente une partie inférieure bombée 18C surmontée d'une partie cylindrique 18B dont la paroi est parallèle à la direction d'introduction 25 de la partie terminale 11, 12 du corps de chauffe. Cette partie cylindrique définit un guide pour la partie terminale 11, 12 introduite dans la collerette. Ceci permet d'augmenter la rigidité de la fixation du corps de chauffe à l'enceinte.

Sur cette figure 7 ont été représentés des faisceaux laser 118A, 118B et 118C qui représentent trois possibilités de soudage au laser de la partie terminale 11, 12 à la collerette 18A. Le faisceau 118B incident sous un angle ∝ depuis l'axe 25 permet de former un cordon de soudure essentiellement dans l'angle formé par la partie terminale 11, 12 et la surface annulaire supérieure de la collerette 18A. L'angle ∞ a une valeur entre 10° et 45°. Grâce à la collerette qui s'étend hors de la surface générale du couvercle 55, de manière perpendiculaire à cette surface générale, la collerette fournit un réservoir de matière pour former un cordon de soudure et en particulier pour combler toute fente entre la collerette et la partie terminale qui la traverse. Ainsi, on évite de fragiliser la zone de soudure au laser par manque de matière. La collerette peut être fondue et aussi déformée sans engendrer de contraintes thermiques ou mécaniques pour la paroi de l'enceinte. Ensuite, comme la collerette constitue un réservoir de matière, la paroi de celle-ci peut rester mince tout comme la paroi de l'enceinte dans la région de la collerette. Ceci permet de fabriquer l'enceinte à moindre coût avec une paroi intégralement mince. De plus, une collerette mince permet de limiter la quantité de chaleur pour le soudage, d'absorber au mieux les contraintes thermiques de ce soudage au laser et ainsi d'empêcher de déformer le couvercle ou la paroi de l'enceinte dans la région du soudage. Cette collerette permet donc de réaliser de manière efficace une soudure au laser qui assure une bonne étanchéité et une bonne rigidité de la fixation du corps de chauffe à l'enceinte grâce à un cordon de soudure épais et continu.

A la figure 7 est encore représenté un faisceau laser 118A prévu comme une alternative au soudage avec le faisceau laser 118B ou pour un autre soudage complémentaire qui est effectué au travers de la partie cylindrique 18B. Finalement, il est également possible de prévoir une soudure intérieure à l'aide du faisceau laser 118C de manière à fermer par un cordon de soudure la fente interne entre cette partie cylindrique et la partie terminale 11, 12 du corps de chauffe. La soudure interne est avantageusement prévue en complément d'une soudure par le faisceau laser 118A ou 118B, mais elle peut aussi être prévue seule.

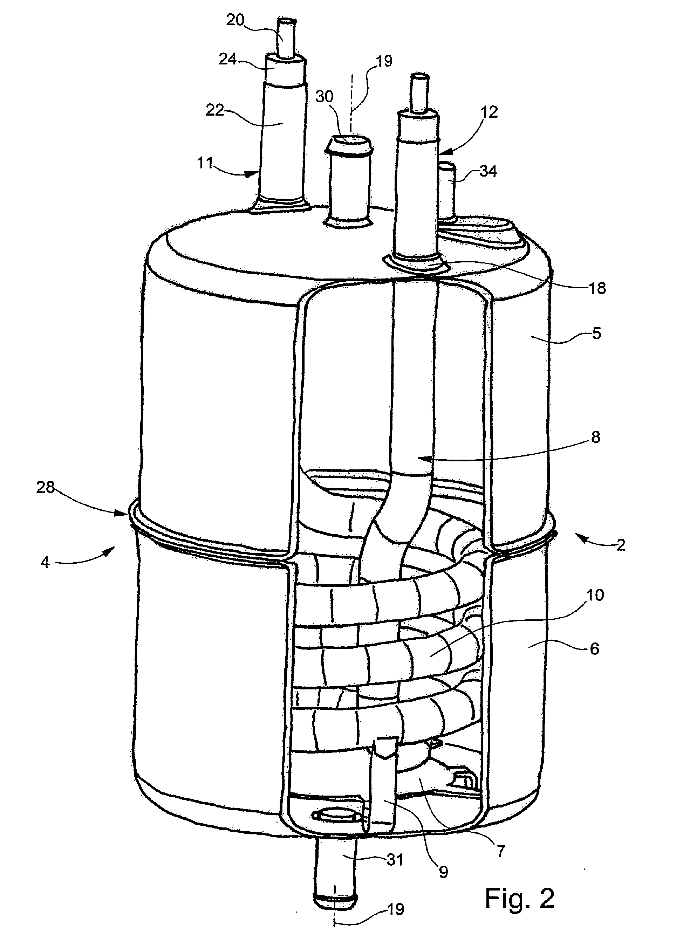

A la figure 8 est représentée une variante de réalisation de la collerette qui s'apparente à celle du chauffe-eau de la figure 2. La collerette 18D présente une base 18E ayant une forme évasée en direction de l'intérieur de l'enceinte et une partie supérieure 18F légèrement tronconique et presque cylindrique. La forme de cette partie supérieure 18F permet de diminuer les tolérances d'usinage de l'ouverture car la partie terminale 11, 12 est introduite dans la collerette depuis la partie inférieure évasée 18E. La collerette 18D conduit ainsi la partie terminale qui peut si nécessaire légèrement écarter le haut de la partie supérieure de manière à éviter la présence d'une fente avant le soudage laser qui sera alors effectué de préférence au niveau du haut de la partie 18F de manière à obtenir un cordon de soudure 26A comme représenté schématiquement à la figure 8.

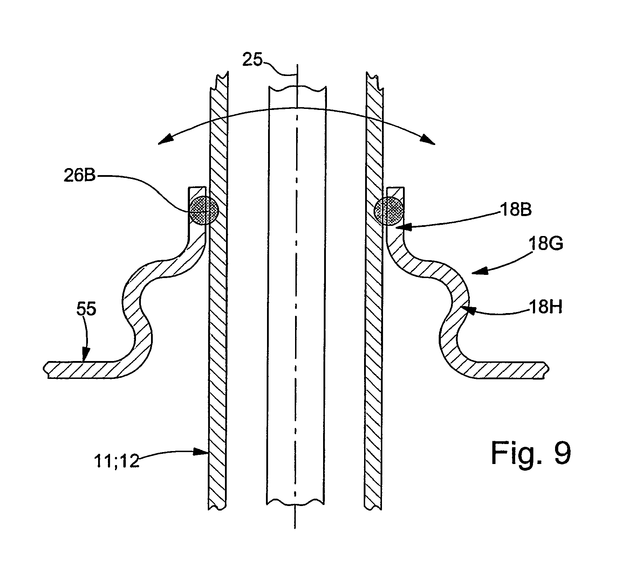

A la figure 9 est représenté une autre variante de réalisation de la collerette selon l'invention. Cette collerette 18G comprend une partie inférieure 18H ayant une certaine élasticité, ce qui permet de déformer la collerette dans une certaine mesure pour incliner l'axe 25 définissant la direction d'introduction de la partie terminale 11, 12 du corps de chauffe. Ainsi, il est possible de varier l'orientation du corps de chauffe pour assurer un positionnement correct de ce corps de chauffe dans l'enceinte du chauffe-eau ou générateur de vapeur. De plus, cette caractéristique peut être avantageuse lorsque le corps de chauffe possède deux parties terminales 11 et 12 comme dans les modes de réalisation décrits précédemment et que l'écartement initial (avant montage) de ces deux parties terminales ne correspond pas exactement à la distance entre les deux ouvertures correspondantes dans la paroi de l'enceinte. Pour pouvoir effectuer un soudage au laser efficace, la collerette 18G comprend une partie supérieure cylindrique 18B. Sur cette figure 9 est représenté un cordon de soudure 26B entre la partie 18B et la partie terminale 11, 12 qui est obtenu à l'aide d'un faisceau laser orienté de manière similaire au faisceau 118A de la figure 7. On notera que la partie supérieure de la collerette 18G peut être tronconique comme représenté à la figure 8 décrite ci-avant.

On remarquera que les collerettes représentés sont venues de manière avec le corps de l'enceinte et sont obtenues notamment par emboutissage. Toutefois ceci n'est pas limitatif, le collerette pouvant dans d'autres variantes être réalisée sous forme d'une pièce rapportée sur le corps de l'enceinte.

A l'aide des figures 10 et 11, on décrira ci-après une installation de soudage laser selon l'invention, développée pour effectuer le soudage du corps de chauffe et des embouts ou éléments de raccord du circuit d'eau/de vapeur associés au chauffe-eau ou générateur de vapeur selon l'invention.

L'installation comprend une source laser (non représentée) fournissant de préférence un faisceau laser pulsé. Le faisceau laser est conduit par une fibre optique 70 à un dispositif de soudage 72 comprenant une partie supérieure fixe 74 connectée à la fibre optique. Le faisceau laser 76 est collimaté par des moyens de collimation 78. Le dispositif de soudage 72 comporte une tête rotative 80, c'est-à-dire monté de manière à pouvoir être entraîné en rotation autour d'un axe géométrique 82. Le dispositif 72 comporte divers éléments optiques définissant un chemin optique 84 pour le faisceau laser 76. Un premier miroir 86 est agencé pour dévier le faisceau laser 76 de manière que le chemin optique en aval de ce miroir 86 soit confondu avec l'axe de rotation 82. En se propageant le long de cet axe 82, le faisceau laser 76 entre dans la tête de soudage rotative 80 où il est dévié par un deuxième miroir 88 selon une direction perpendiculaire à l'axe géométrique 82. Ce miroir 88 est agencé dans une première partie 90 de la tête 80. Cette partie 90 est entraînée en rotation par des moyens moteurs 94 représentés schématiquement. Ces moyens moteurs 94 sont couplés à un module rotatif 96 agencé pour entraîner en rotation la partie 90. Des moyens de couplage en rotation entre cette partie 90 et le module rotatif 96 sont donc prévus.

En dessous du module 96 sont agencés des moyens 100 de transfert d'un gaz de travail entre I a partie fixe 74 et la tête rotative 80. Ces moyens seront décrits plus en détail ci-après à la l'aide de la figure 11. La tête rotative 80 comprend en outre une partie 102 comprenant un miroir 104 qui dévie le faisceau laser 76 provenant du miroir 88 selon un axe optique oblique relativement à l'axe géométrique 82 et orienté en direction de cet axe 82 selon le sens de propagation du faisceau laser. La partie 102 comprend dans sa région terminale une buse 106 par laquelle sort le faisceau laser 76 et le gaz de travail. Ce gaz de travail est amené au niveau de la buse 106 au moyen d'un conduit 108. Finalement, des moyens de focalisation 110 sont agencés dans la partie 102.

Les parties 90 et 102 de la tête 80 comprennent des moyens complémentaires 105 (représentés schématiquement) permettant de déplacer ou coulisser la partie 102 relativement à la partie 90 selon la direction perpendiculaire à l'axe 82. La position de la partie 102 est ajustée en fonction du diamètre de la pièce à souder. Une fois cette position déterminée, la partie 102 est maintenue fixement à la partie 90. Il s'agit donc ici de moyens de réglage du rayon du cercle défini par le point focal lorsque la tête 80 est entraînée en rotation. Lorsque le dispositif 72 est en fonctionnement, les parties 90 et 102 restent solidaires l'une de l'autre.

Pour le soudage des extrémités 11 et 12 du corps de chauffe du chauffe-eau 2 décrit aux figures 1 à 3, l'axe optique 112 est agencé de manière que l'angle formé entre cet axe 112 et l'axe de rotation 82 est égal environ 20°. Cet angle nettement inférieur à 45° a été prévu notamment à cause de la présence de l'embout 30. Il est ainsi possible à l'aide du dispositif 72 de souder la partie terminale 11, respectivement 12 à l'enceinte 2 à l'aide d'un faisceau laser focalisé et d'un gaz de travail apporté à proximité du cordon de soudure formé. En effet, l'agencement particulier de la tête 80 permet d'apporter la buse 106 à proximité de la zone de soudure, cette buse tournant autour de la partie 11, respectivement 12 du corps de chauffe lors de la soudure au laser.

On remarquera que lorsque la tête rotative 80 est entraînée en rotation, l'axe 112 définit une surface de révolution conique et le point focal définit un cercle centré sur l'axe de rotation 82. Ainsi, pour effectuer le soudage au laser, l'axe central 25 de ta partie terminale 11, respectivement 12 est aligné sur l'axe de rotation 82. Des moyens de focalisation 102 sont agencés et ajustés de manière à ce que le point focal soit situé sensiblement dans la zone du bord du trou de l'enceinte 2 traversé par la partie terminale 11, respectivement 12 du corps de chauffe. On réalise ainsi un soudage précis et rapide du corps de chauffe à l'enceinte.

Le point focal est situé le long de l'axe optique 112 avant l'intersection de cet axe optique avec l'axe de rotation 82. Le faisceau laser définit ainsi une surface de révolution tronconique après avoir été réfléchie par le miroir 104 lorsque la tête 80 est entraînée en rotation. Comme le point focal définit un cercle lorsque la tête 80 tourne, on obtient une soudure circulaire continue par un réglage de la vitesse de rotation relativement à la fréquence des impulsions du faisceau laser, de sorte qu'une bonne étanchéité est ainsi garantie.

La figure 11 montre schématiquement de manière plus détaillée le dispositif 100 de transfert du gaz de travail entre la partie fixe 74 et la tête rotative 80 du dispositif de soudage 72. Le dispositif 100 comprend une bague ou partie cylindrique externe 120, laquelle est solidaire de la partie fixe 74. A sa périphérie, la bague 120 comprend des moyens de raccord 124 à un tuyau 122 d'amenée du gaz. A la suite des moyens de raccord, la bague présente une ouverture 126 traversante. La partie principale 130 du dispositif 100 présente une ouverture centrale 132 pour le passage du faisceau laser et une gorge 134 à sa périphérie. Cette gorge 134 est circulaire et débouche sur la paroi latérale externe de la partie 130. L'ouverture 126 dans la bague 120 est agencée relativement à la gorge 134 de manière à être sensiblement alignée sur celle-ci, c'est-à-dire de manière à déboucher dans cette gorge. Ensuite, une ouverture verticale 138 relie la gorge 134 à des moyens de raccord 140 au tuyau 106, ce dernier amenant le gaz de travail au niveau de la buse 106.

La partie principale 130 est solidaire en rotation de la tête de soudage 80. Evidemment, des moyens d'étanchéité sont prévus entre la bague 120 et la partie 130 de manière que le gaz entrant dans la gorge 134, quelle que soit la position angulaire de la tête de soudage, soit contraint de s'évacuer de cette gorge 134 par le conduit 138 en direction de la buse de la tête de soudage.

L'installation d'usinage décrite ci-avant permet ainsi non seulement d'effectuer précisément une soudure circulaire autour d'un corps de chauffe, mais également d'apporter un gaz de travail de manière localisée et sous pression pour effectuer soigneusement cette soudure au laser.

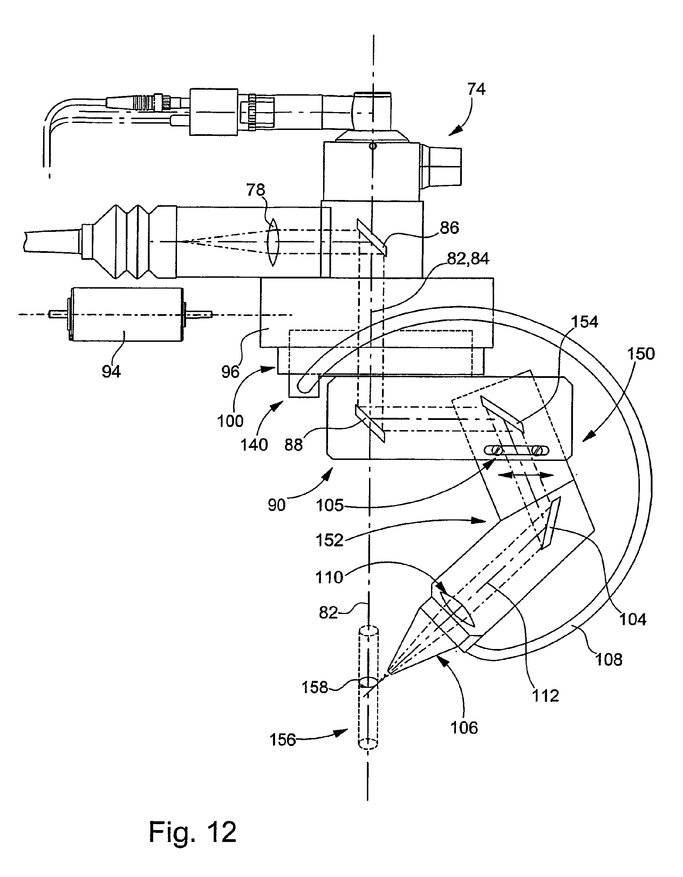

La figure 12 représente un deuxième mode de réalisation d'une installation de soudage au laser selon l'invention. Les éléments déjà décrits ci-avant ne seront pas décrits à nouveau ici en détail. Ce deuxième mode de réalisation se distingue du premier mode de réalisation essentiellement par l'agencement de la partie inférieure 152 de la tête de soudage rotative 150. La partie supérieure 90 de la tête 150 est similaire à celle de la tête 80 décrite dans le cadre du premier mode de réalisation. La partie inférieure 152 est montée sur la partie 90 de manière à permettre un ajustement de sa position selon une direction perpendiculaire à l'axe de rotation 82. Dans cette partie 152 est agencée un premier miroir 154 déviant le faisceau laser d'un angle inférieur à 90°, notamment d'un angle de 67,5°. La partie 152 présente un coude dans sa région intermédiaire où est agencé un autre miroir 104 déviant le chemin optique du faisceau laser également d'un angle de 67,5°. Ainsi, l'axe optique 112 du faisceau laser en aval du miroir 104 présente un angle de 45° relativement à l'axe de rotation 82. Un tel agencement permet de laisser libre jusqu'à la partie 90 un volume cylindrique 156 ayant pour section transversale le cercle 158 défini par le point focal du faisceau laser lorsque la tête 150 est entraînée en rotation.

Le deuxième mode de réalisation est avantageux par le fait que l'axe optique présente une ouverture angulaire d'environ 45° relativement à l'axe de rotation sans pour autant nécessiter un allongement de la partie supérieure 90 de cette tête. La tête est ainsi compacte et le moment d'inertie en rotation est inférieur à celui d'une tête du type du premier mode de réalisation qui serait agencée de manière à avoir une ouverture de 45° entre l'axe 82 et l'axe 112. Le rayon du cercle 158 peut aisément être ajusté par un ajustement de la position de la partie 152 relativement à la partie 90, selon une direction perpendiculaire à l'axe de rotation 82. Un tel ajustement est aisé car il n'engendre aucune modification dans l'orientation des divers miroirs prévus.

## Revendications

1. Procédé de soudage d'un chauffe-eau (2) ou générateur de vapeur (52) comportant une enceinte (4) et un corps de chauffe (8), avec une partie principale (10; 58) située à l'intérieur de ladite enceinte et au moins une partie terminale (11, 12) sortant de cette enceinte, cette au moins une partie terminale traversant ladite enceinte par au moins une ouverture correspondante (13, 14) prévue dans une paroi (16; 55) de cette enceinte, ladite enceinte comprenant une collerette (18; 18A; 18D; 18G) qui est agencée en périphérie de chaque ouverture correspondante et qui s'élève hors de la surface générale de ladite paroi de l'enceinte selon la direction axiale (25) de ladite partie terminale au niveau de cette ouverture, ce procédé de soudage étant **caractérisé en ce que** ledit corps de chauffe est fixé de manière étanche à ladite enceinte par un soudage laser effectué au moyen d'un faisceau laser dirigé sensiblement sur la surface annulaire supérieure de chaque collerette, ledit faisceau laser et ladite direction axiale définissant entre eux un angle d'incidence ayant une valeur située sensiblement entre 10 et 45 degrés, de manière que cette collerette fournisse un réservoir de matière pour former un cordon de soudure continu au niveau du haut de cette collerette.

2. Procédé de soudage selon la revendication précédente, **caractérisé en ce que** ladite collerette (18; 18D) présente une forme évasée en direction de l'intérieur de ladite enceinte.

3. Procédé de soudage selon la revendication 1 ou 2, **caractérisé en ce que** ladite collerette (18A; 18G) présente une partie (18B) ayant une paroi parallèle à ladite direction axiale de ladite partie terminale et définissant un guide pour cette partie terminale.

4. Procédé de soudage selon l'une des revendications précédentes, **caractérisé en ce que** ladite collerette (18G) est formée de manière à présenter une certaine élasticité et/ou déformabilité permettant une certaine variation de la direction axiale de ladite partie terminale au niveau de cette collerette.

5. Procédé de soudage selon l'une quelconque des revendications précédentes, **caractérisé en ce que** ladite enceinte est en inox.

6. Procédé de soudage selon l'une des revendications précédentes, **caractérisé en ce que** ledit soudage laser est réalisé par une succession d'impulsions laser qui engendre une succession de points de soudure se superposant partiellement l'un à l'autre.

7. Procédé de soudage selon la revendication 6, **caractérisé en ce que** chaque impulsion laser a un profil de puissance présentant une puissance sur une première période (P1) essentiellement supérieure à la puissance sur une deuxième période (P2) suivant ladite première période, et ce que la puissance au cours de ladite deuxième période est globalement décroissante.

8. Procédé de soudage selon l'une des revendications précédentes et dans lequel ladite enceinte (4) est formée au moins de deux parties (5, 6; 55, 56) assemblées par soudage laser, **caractérisé en ce que** ces deux parties 5, 6; 55, 56 présentent chacune un bord saillant (28) qui forme une partie terminale évasée qui sort hors de la surface générale de ladite enceinte (4) et qui est appliqué contre le bord saillant (28) de l'autre partie, les deux bords saillants (28) respectifs de ces deux parties étant udés par un faisceau laser au niveau du sommet de ces deux bords saillants (28) qui se rejoignent.

9. Procédé de soudage selon la revendication 8, **caractérisé en ce que** ladite enceinte présente une paroi relativement mince et **en ce que** les deux parties 5, 6; 55, 56 qui la forment sont en métal et embouties.

10. Chauffe-eau (2) ou générateur de vapeur (52) produit avec un procédé de soudage selon l'une des revendications précédentes.

## Patentansprüche

1. Verfahren zum Schweißen eines Heißwasserbereiters (2) oder Dampferzeugers (52) mit einer Kammer (4) und einem Heizelement (8) mit einem Hauptteil (10; 58), das sich im Inneren der besagten Kammer befindet und mit wenigstens einem aus dieser Kammer ragenden Endteil (11, 12), wobei das wenigstens eine Endteil besagte Kammer durch wenigstens eine zugehörige Öffnung (13, 14) hindurchragt, die in einer Wand (16; 55) dieser Kammer vorgesehen ist, wobei besagte Kammer einen Kragen (18; 18A;18D;18G) enthält, der am Umfang jeder zugehörigen Öffnung angeordnet ist und der über die Gesamtoberfläche der besagten Wand der Kammer in einer axialen Richtung (25) des besagten Endteils am Niveau dieser Öffnung hinausragt, wobei dieses Verfahren zum Schweißen **dadurch gekennzeichnet ist, dass** der besagte Heizkörper an die besagte Kammer durch eine Laserschweißung dicht fixiert ist, die durch einen Laserstrahl bewirkt wird, der auf die ringförmige obere Oberfläche eines jeden Kragens gerichtet wird, wobei zwischen dem besagten Laserstrahl und der besagten Axialrichtung ein Einfallswinkel definiert ist, der etwa zwischen 10° und 45° beträgt, so dass dieser Kragen ein Materialreservoir bereitstellt, um eine zusammenhängende Schweißraupe in der Höhe dieses Kragens zu bilden.

2. Verfahren zum Schweißen gemäß dem vorhergehenden Patentanspruch, **dadurch gekennzeichnet, dass** der besagte Kragen (18; 18D) eine sich in Richtung zum Inneren der besagten Kammer aufgeweitete Form aufweist.

3. Verfahren zum Schweißen gemäß Patentanspruch 1 oder 2, **dadurch gekennzeichnet, dass** der besagte Kragen (18A; 18G) einen Teil (18B) umfasst, der eine zur besagten axialen Richtung des besagten Endteils parallele Wand aufweist und eine Führung für dieses Endteil festlegt.

4. Verfahren zum Schweißen gemäß einem der vorhergehenden Patentansprüche, **dadurch gekennzeichnet, dass** der besagte Kragen (18G) derart gebildet ist, dass er eine bestimmte Elastizität und/oder Verformbarkeit aufweist, die es ermöglicht, die axiale Richtung des besagten Endteils am Niveau dieses Kragens in einem gewissen Ausmaß zu variieren.

5. Verfahren zum Schweißen gemäß einem der vorhergehenden Patentansprüche, **dadurch gekennzeichnet, dass** besagte Kammer aus einem rostfreien Stahl besteht.

6. Verfahren zum Schweißen gemäß einem der vorhergehenden Patentansprüche, **dadurch gekennzeichnet, dass** das besagte Laserschweißen durch eine Folge von Laserpulsen verwirklicht wird, die eine Folge von Schweißpunkten erzeugen, von denen sich der eine mit dem anderen teilweise überlagert.

7. Verfahren zum Schweißen gemäß Patentanspruch 6, **dadurch gekennzeichnet, dass** jeder Laserpuls ein Leistungsprofil aufweist, das in einem ersten Abschnitt (P1) eine Leistung hat, die im Wesentlichen größer ist als die Leistung in einem zweiten, auf den ersten Abschnitt folgenden zweiten Abschnitt (P2) aufweist, und dass die Leistung im Laufe des besagten zweiten Abschnittes insgesamt abfällt.

8. Verfahren zum Schweißen gemäß einem der vorhergehenden Patentansprüche bei dem die besagte Kammer (4) aus wenigstens zwei Teilen (5, 6; 55, 56) gebildet ist, die durch eine Laserschweißnaht zusammengefügt sind, **dadurch gekennzeichnet, dass** jedes dieser beiden Teile (5, 6; 55, 56) einen vorstehenden Rand (28) aufweist, der ein vorstehendes Endteil bildet das über die Gesamtoberfläche der besagten Kammer (4) hinausragt und das gegen den vorstehenden Rand (28) des anderen Teils angelegt ist, wobei die zwei jeweiligen vorstehenden Ränder (28) dieser beiden Teile mit einem Laserstrahl auf der Höhe des Scheitels dieser zwei vorstehenden Ränder (28) verschweißt sind und sich zuasmmenfügen.

9. Verfahren zum Schweißen gemäß Patentanspruch 8, **dadurch gekennzeichnet, dass** die besagte Kammer eine relativ dünne Wand aufweist, und dass diese beiden Teile (5, 6; 55, 56) aus einem Metall durch Tiefziehen gebildet sind.

10. Heißwasserbereiter (2) oder Dampferzeuger (52) hergestellt mit einem Verfahren zum Schweißen gemäß einem der vorhergehenden Patentansprüche.

## Claims

1. Method for welding a water heater (2) or steam generator (52) comprising a chamber (4) and a heating element (8) with a main section (10; 58) located inside said chamber and at least one end section (11, 12) exiting from this chamber, whereby said at least one end section passing through said chamber through at least one corresponding opening (13, 14) provided in a wall (16; 55) of this chamber, said chamber comprises a flange (18; 18A, 18D; 18G) which is arranged at the periphery of each corresponding opening and protrudes out of the main surface of said wall of the chamber in the axial direction (25) of said end section at the level of this opening, whereby said method for welding is **characterized in that** said heating element is tightly fixed to said chamber by laser welding performed with a laser beam directed to the annular upper surface of each flange, said laser beam and said axial direction defining an angle of incidence between them having a value between about 10 and 45 degrees whereby said flange provides a reservoir of material to build a continuous welding bead at the level of a top of said flange.

2. Method for welding according to the preceding claim, **characterized in that** said flange (18A; 18D) has a shape widening towards the interior of said chamber.

3. Method for welding according to claim 1 or 2, **characterized in that** said flange (18A; 18G) has a section (18B) having a wall parallel to said axial direction of said end section and defining a guide for this end section.

4. Method for welding according to one of the preceding claims, **characterized in that** said flange (18G) is formed in such a way that it has a certain elasticity and/or deformability to allow a certain variation of the axial direction of said end section at the level of this flange.

5. Method for welding according to one of the preceding claims, **characterized in that** said chamber is made of stainless steel.

6. Method for welding according to one of the preceding claims, **characterized in that** said laser weld is performed with a series of laser pulses which produce a series of partial superposing welding spots.

7. Method for welding according to claim 6, **characterized in that** each laser pulse having a power profile with a power over a first period (P1) which is essentially higher than the power over a second period (P2) following said first period, whereby the power during that second period decreases overall.

8. Method for welding according to one of the preceding claims in which said chamber (4) is formed by at least two sections (5, 6; 55, 56) which are assembled by a laser weld, **characterized in that** each of these two sections (5, 6; 55, 56) has a protruding edge forming an end section protruding out of the main surface of said chamber (4) which is applied against the protruding edge (28) of the other section, whereby the two protruding edges (28) of these two sections are welded by a laser beam at the level of the apex of these two protruding edges (28) that join.

9. Method of welding according to claim 8, **characterized in that** said chamber has a relatively thin wall and that these two sections (5, 6; 55, 56) are formed by a stamped metal.

10. Water heater (2) or steam generator (52) produced with a method for welding according to one of the preceding claims.
